# EUROPEAN PATENT APPLICATION

(11) **EP 2 075 180 A1**
(43) Date of publication of application: **01.07.2009**
(21) Application number: 08172865.1
(22) Date of filing: 23.12.2008
(51) Int. Cl.: B62J 6/06, H02K 21/24

(54) **Generating apparatus using magnetic induction to generate electrical energy to provide illuminating function**

(30) Priority: 25.12.2007 TW 96222030 U
(71) Applicant: Chuen Ters Industrial Co., Ltd., Shen-Gang Township T'ai chung (TW)
(72) Inventor: Lin, Ming-Chuan, Taichung County (TW)
(74) Representative: Lang, Christian

(57) **Abstract**

A generating apparatus includes an induction unit secured on a fixed mandrel of a bicycle, and a magnetic unit secured on a rotation member of the bicycle. Thus, when the magnetic unit is rotatable relative to the induction unit, the magnets of the magnetic unit are movable relative to the induction coil of the induction unit to produce a magnetic induction effect, so that the induction coil of the induction unit produces an induction electrical energy under action of the successive mutual interaction of the magnetic lines of force of the north poles and the south poles of the magnets of the magnetic unit to supply an electric power to the lamp of the bicycle so as to provide an illuminating function.

## Description

### BACKGROUND OF THE INVENTION

### 1. Field of the Invention

The present invention relates to a generating apparatus and, more particularly, to a generating apparatus for a bicycle.

### 2. Description of the Related Art

A conventional generating apparatus for a bicycle can generate an electric power by a rubbing action of a wheel of the bicycle to supply the electric power to a lamp of the bicycle so as to provide an illuminating function. However, the generating apparatus is in contact with the wheel of the bicycle so that the generating apparatus will interfere with rotation of the wheel of the bicycle, thereby decreasing the travel speed of the bicycle. On the other hand, a battery can be used to supply an electric power to the lamp of the bicycle so as to provide an illuminating function. However, the battery easily wastes the natural source and causes an environmental pollution.

### BRIEF SUMMARY OF THE INVENTION

In accordance with the present invention, there is provided a generating apparatus in combination of a bicycle, comprising an induction unit secured on a fixed mandrel of a bicycle, and a magnetic unit secured on a rotation member of the bicycle to rotate with the rotation member of the bicycle and to rotate relative to the induction unit to produce a magnetic induction effect between the induction unit and the magnetic unit.

The primary objective of the present invention is to provide a generating apparatus using a magnetic induction to generate an electrical energy so as to provide an illuminating function.

Another objective of the present invention is to provide a generating apparatus for a bicycle, wherein when the magnetic unit is rotatable relative to the induction unit, the magnets of the magnetic unit are movable relative to the induction coil of the induction unit to produce a magnetic induction effect instantaneously between the induction coil of the induction unit and the magnets of the magnetic unit, so that the induction coil of the induction unit produces an induction electrical energy under action of the successive mutual interaction of the magnetic lines of force of the north poles and the south poles of the magnets of the magnetic unit to supply an electric power to the lamp of the bicycle so as to provide an illuminating function.

A further objective of the present invention is to provide a generating apparatus for a bicycle, wherein the generating apparatus can generate an electric power successively by rotating the magnetic unit relative to the induction unit, without needing any external energy source and without producing any pollution, thereby saving the natural source and achieving an environmental protection.

A further objective of the present invention is to provide a generating apparatus for a bicycle, wherein the induction unit is mounted on the fixed mandrel of the bicycle, and the magnetic unit is mounted on the rotation member of the bicycle, so that the generating apparatus is mounted on the bicycle easily and quickly, thereby facilitating a user mounting the generating apparatus.

A further objective of the present invention is to provide a generating apparatus for a bicycle, wherein a distance is defined between the induction unit and the magnetic unit, so that the induction unit is spaced from the magnetic unit and will not interfere with rotation of the rotation member of the bicycle and movement of the bicycle.

Further benefits and advantages of the present invention will become apparent after a careful reading of the detailed description with appropriate reference to the accompanying drawings.

### BRIEF DESCRIPTION OF THE SEVERAL VIEWS OF THE DRAWING(S)

Fig. 1 is a perspective view of a generating apparatus in accordance with the preferred embodiment of the present invention.
Fig. 2 is an exploded perspective view of a magnetic unit of the generating apparatus as shown in Fig. 1.
Fig. 3 is a rear view of the magnetic unit of the generating apparatus as shown in Fig. 2.
Fig. 4 is an exploded perspective view of an induction unit of the generating apparatus as shown in Fig. 1.
Fig. 5 is a perspective view of the generating apparatus for a bicycle as shown in Fig. 1.
Fig. 6 is a side view of the generating apparatus for a bicycle as shown in Fig. 5.
Fig. 7 is a front view of the generating apparatus for a bicycle as shown in Fig. 5.

### DETAILED DESCRIPTION OF THE INVENTION

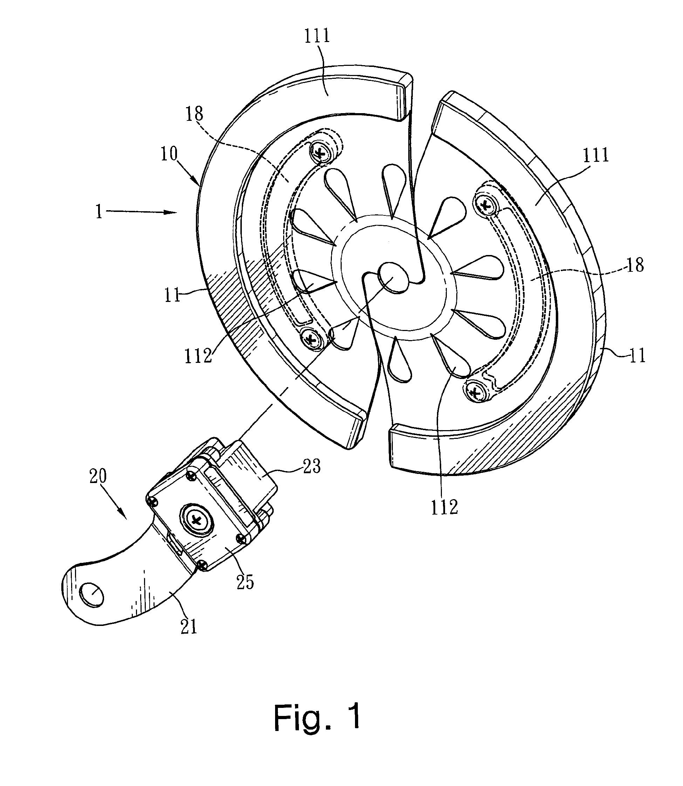

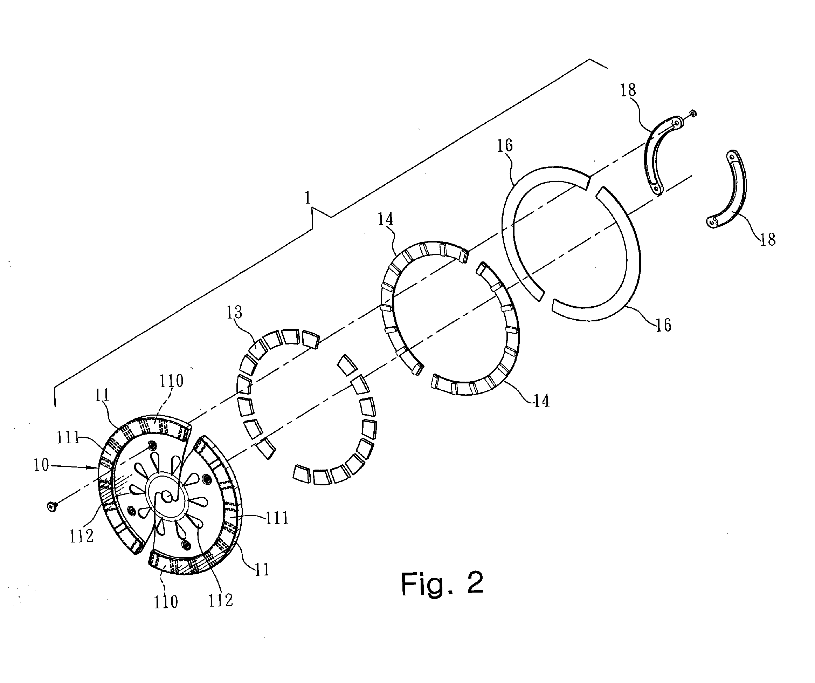

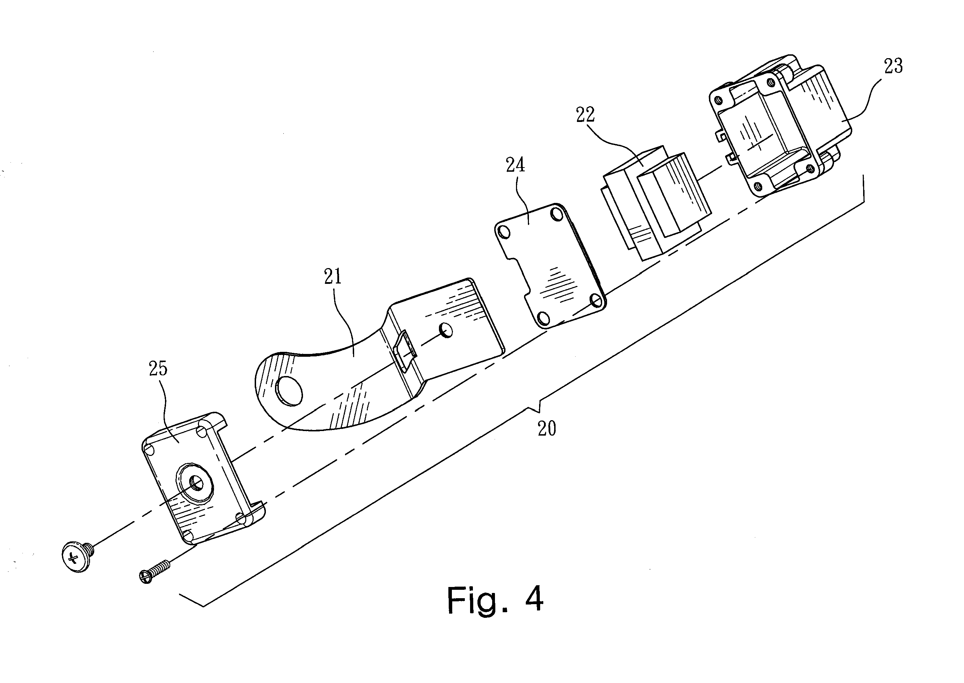

Referring to the drawings and initially to Figs. 1-5, a generating apparatus for a bicycle in accordance with the preferred embodiment of the present invention comprises an induction unit 20 secured on a fixed mandrel 31 of a bicycle, and a magnetic unit 1 secured on a rotation member 30 of the bicycle to rotate with the rotation member 30 of the bicycle and to rotate relative to the induction unit 20 to produce a magnetic induction effect between the induction unit 20 and the magnetic unit 1.

The rotation member 30 of the bicycle is a wheel.

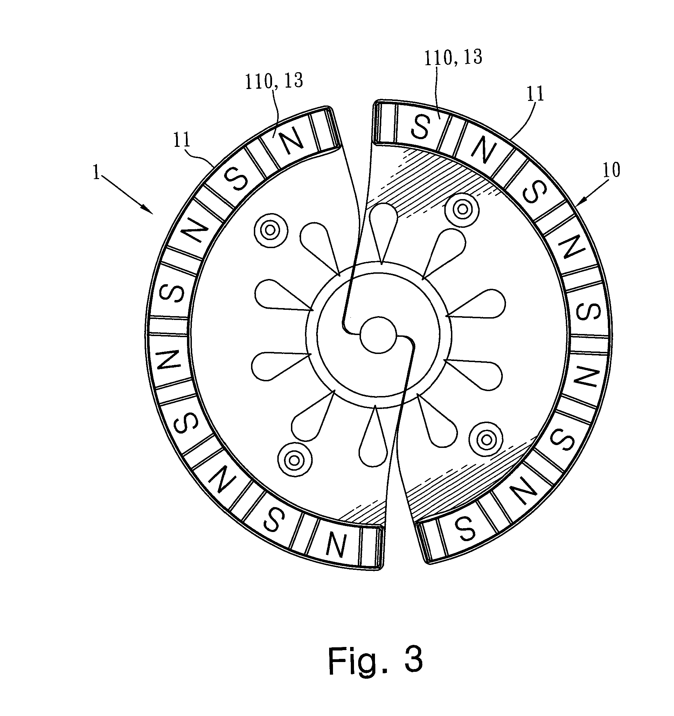

The magnetic unit 1 includes a disk 10 secured on the rotation member 30 of the bicycle to rotate with the rotation member 30 of the bicycle, and a plurality of magnets 13 mounted on an outer periphery of the disk 10 and are arranged in an annular shape. Each of the magnets 13 of the magnetic unit 1 has a north pole "N" and a south pole "S", and the north poles "N" and the south poles "S" of the magnets 13 of the magnetic unit 1 are arranged in a staggered manner. Thus, the north pole "N" of each of the magnets 13 of the magnetic unit 1 is located between any two adjacent south poles "S", and the south pole "S" of each of the magnets 13 of the magnetic unit 1 is located between any two adjacent north poles "N" as shown in Fig. 3.

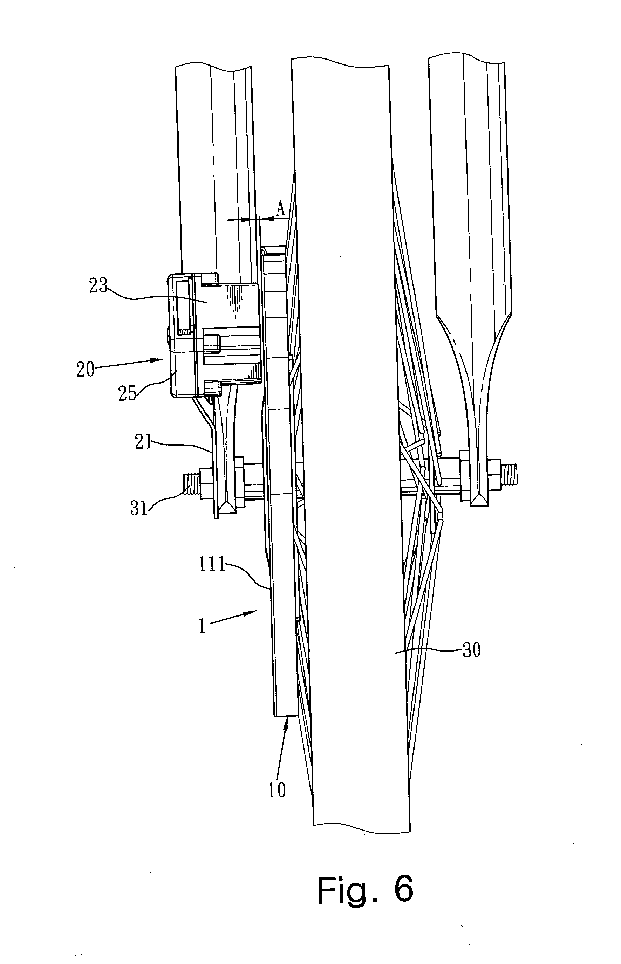

The induction unit 20 aligns with the magnetic unit 1 and includes a support bracket 21 having a first end secured on the fixed mandrel 31 of the bicycle, and an induction coil 22 mounted on a second end of the support bracket 21 and aligning with the magnets 13 of the magnetic unit 1 to produce a magnetic induction effect between the induction coil 22 of the induction unit 20 and the magnets 13 of the magnetic unit 1 when the magnetic unit 1 is rotatable relative to the induction unit 20. Preferably, a distance "A" is defined between the induction unit 20 and the magnetic unit 1 as shown in Fig. 6, so that the induction unit 20 is spaced from the magnetic unit 1, and the induction coil 22 of the induction unit 20 is spaced from the magnets 13 of the magnetic unit 1 with a determined distance.

The disk 10 of the magnetic unit 1 consists of two substantially semi-circular sheet plates 11 juxtaposed to and combined with each other. The outer periphery of the disk 10 of the magnetic unit 1 is provided with an annular protruding face 111 which has an inside provided with a plurality of receiving grooves 110 to receive the magnets 13 of the magnetic unit 1. The annular protruding face 111 of the disk 10 of the magnetic unit 1 aligns with the induction coil 22 of the induction unit 20 when the magnetic unit 1 is rotatable relative to the induction unit 20. Preferably, the distance "A" is defined between the induction unit 20 and the annular protruding face 111 of the disk 10 of the magnetic unit 1 as shown in Fig. 6. The disk 10 of the magnetic unit 1 has a surface provided with a plurality of openings 112 surrounded by the annular protruding face 111. The disk 10 of the magnetic unit 1 is secured on the rotation member 30 of the bicycle by two substantially arc-shaped fastening members 18.

The magnetic unit 1 further includes a magnetic conductance member 14 mounted on a side of the annular protruding face 111 of the disk 10 and abutting the magnets 13, and a cover 16 secured on the side of the annular protruding face 111 of the disk 10 and abutting the magnetic conductance member 14 to secure the magnetic conductance member 14 and the magnets 13 on the annular protruding face 111 of the disk 10. The magnetic conductance member 14 of the magnetic unit 1 consists of two substantially semi-annular plates, and the cover 16 of the magnetic unit 1 consists of two substantially semi-annular plates.

The induction coil 22 of the induction unit 20 is mounted on the second end of the support bracket 21 by a housing 23 and an end cap 25. The housing 23 of the induction unit 20 is mounted on a first side of the second end of the support bracket 21 to receive the induction coil 22, and the end cap 25 of the induction unit 20 is mounted on a second side of the second end of the support bracket 21 and combined with the housing 23. The induction unit 20 further includes a bushing 24 located between the induction coil 22 and the second end of the support bracket 21.

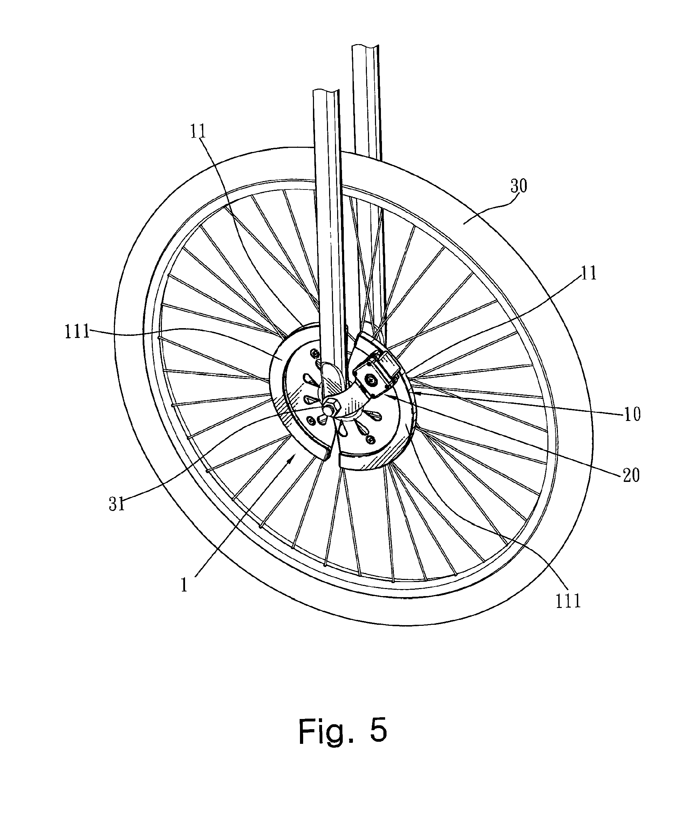

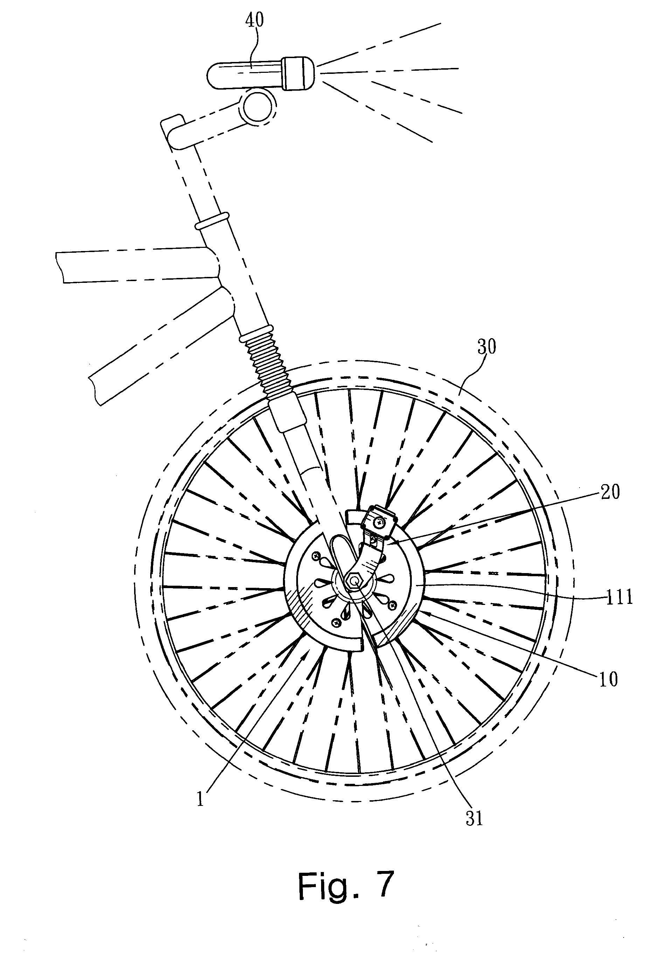

In operation, referring to Figs. 5-7 with reference to Figs. 1-4, the induction coil 22 of the induction unit 20 aligns with the magnets 13 of the magnetic unit 1, so that when the magnetic unit 1 is rotatable relative to the induction unit 20, the magnets 13 of the magnetic unit 1 are movable relative to the induction coil 22 of the induction unit 20 to produce a magnetic induction effect instantaneously between the induction coil 22 of the induction unit 20 and the magnets 13 of the magnetic unit 1. At this time, the induction coil 22 of the induction unit 20 produces a time varying magnetic field by successive mutual interaction of the magnetic lines of force of the north poles "N" and the south poles "S" of the magnets 13 of the magnetic unit 1, so that the induction coil 22 of the induction unit 20 inducts and produces an induction electrical energy under action of the time varying magnetic field. In such a manner, when the magnetic unit 1 is rotatable relative to the induction unit 20 successively, the induction coil 22 of the induction unit 20 produces an electrical energy so that the generating apparatus can generate an electric power successively. Then, the electric power generated by the generating apparatus is processed by filtering, rectifying, R/L/C oscillating output and loading and is supplied to a lamp 40 of the bicycle to provide an illuminating function.

Accordingly, when the magnetic unit 1 is rotatable relative to the induction unit 20, the magnets 13 of the magnetic unit 1 are movable relative to the induction coil 22 of the induction unit 20 to produce a magnetic induction effect instantaneously between the induction coil 22 of the induction unit 20 and the magnets 13 of the magnetic unit 1, so that the induction coil 22 of the induction unit 20 produces an induction electrical energy under action of the successive mutual interaction of the magnetic lines of force of the north poles "N" and the south poles "S" of the magnets 13 of the magnetic unit 1 to supply an electric power to the lamp 40 of the bicycle so as to provide an illuminating function. In addition, the generating apparatus can generate an electric power successively by rotating the magnetic unit 1 relative to the induction unit 20, without needing any external energy source and without producing any pollution, thereby saving the natural source and achieving an environmental protection. Further, the induction unit 20 is mounted on the fixed mandrel 31 of the bicycle, and the magnetic unit 1 is mounted on the rotation member 30 of the bicycle, so that the generating apparatus is mounted on the bicycle easily and quickly, thereby facilitating a user mounting the generating apparatus. Further, a distance "A" is defined between the induction unit 20 and the magnetic unit 1, so that the induction unit 20 is spaced from the magnetic unit 1 and will not interfere with rotation of the rotation member 30 of the bicycle and movement of the bicycle.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A generating apparatus in combination of a bicycle, comprising:
an induction unit secured on a fixed mandrel of a bicycle;
a magnetic unit secured on a rotation member of the bicycle to rotate with the rotation member of the bicycle and to rotate relative to the induction unit to produce a magnetic induction effect between the induction unit and the magnetic unit.

2. The generating apparatus in combination of a bicycle in accordance with claim 1, wherein
the magnetic unit comprises:
a disk secured on the rotation member of the bicycle to rotate with the rotation member of the bicycle;
a plurality of magnets mounted on an outer periphery of the disk;
the induction unit comprises:
a support bracket having a first end secured on the fixed mandrel of the bicycle;
an induction coil mounted on a second end of the support bracket and aligning with the magnets of the magnetic unit to produce a magnetic induction effect between the induction coil of the induction unit and the magnets of the magnetic unit when the magnetic unit is rotatable relative to the induction unit.

3. The generating apparatus in combination of a bicycle in accordance with claim 2, wherein a distance is defined between the induction unit and the magnetic unit, so that the induction unit is spaced from the magnetic unit, and the induction coil of the induction unit is spaced from the magnets of the magnetic unit with a determined distance.

4. The generating apparatus in combination of a bicycle in accordance with claim 2, wherein the outer periphery of the disk of the magnetic unit is provided with an annular protruding face which has an inside provided with a plurality of receiving grooves to receive the magnets of the magnetic unit.

5. The generating apparatus in combination of a bicycle in accordance with claim 4, wherein the annular protruding face of the disk of the magnetic unit aligns with the induction coil of the induction unit when the magnetic unit is rotatable relative to the induction unit and / or wherein a distance is defined between the induction unit and the annular protruding face of the disk of the magnetic unit.

6. The generating apparatus in combination of a bicycle in accordance with claim 4, wherein the disk of the magnetic unit has a surface provided with a plurality of openings surrounded by the annular protruding face.

7. The generating apparatus in combination of a bicycle in accordance with claim 4, wherein the magnetic unit further comprises:
a magnetic conductance member mounted on a side of the annular protruding face of the disk and abutting the magnets;
a cover secured on the side of the annular protruding face of the disk and abutting the magnetic conductance member to secure the magnetic conductance member and the magnets on the annular protruding face of the disk.

8. The generating apparatus in combination of a bicycle in accordance with claim 1, wherein the rotation member of the bicycle is a wheel.

9. The generating apparatus in combination of a bicycle in accordance with claim 2, wherein the magnets of the magnetic unit are arranged in an annular shape and / or wherein
each of the magnets of the magnetic unit has a north pole and a south pole;
the north poles and the south poles of the magnets of the magnetic unit are arranged in a staggered manner;
the north pole of each of the magnets of the magnetic unit is located between any two adjacent south poles;
the south pole of each of the magnets of the magnetic unit is located between any two adjacent north poles.

10. The generating apparatus in combination of a bicycle in accordance with claim 1, wherein the induction unit aligns with the magnetic unit.

11. The generating apparatus in combination of a bicycle in accordance with claim 2, wherein the disk of the magnetic unit comprises two substantially semi-circular sheet plates juxtaposed to and combined with each other and / or wherein the disk of the magnetic unit is secured on the rotation member of the bicycle by two substantially arc-shaped fastening members.

12. The generating apparatus in combination of a bicycle in accordance with claim 2, wherein the induction coil of the induction unit is mounted on the second end of the support bracket by a housing and an end cap.

13. The generating apparatus in combination of a bicycle in accordance with claim 12, wherein
the housing of the induction unit is mounted on a first side of the second end of the support bracket to receive the induction coil;
the end cap of the induction unit is mounted on a second side of the second end of the support bracket and combined with the housing and / or wherein the induction unit further includes a bushing located between the induction coil and the second end of the support bracket.

14. The generating apparatus in combination of a bicycle in accordance with claim 2, wherein when the magnetic unit is rotatable relative to the induction unit, the magnets of the magnetic unit are movable relative to the induction coil of the induction unit.

15. The generating apparatus in combination of a bicycle in accordance with claim 7, wherein the magnetic conductance member of the magnetic unit consists of two substantially semi-annular plates and / or wherein the cover of the magnetic unit consists of two substantially semi-annular plates.
